# EUROPÄISCHE PATENTSCHRIFT

(11) **EP 1 598 227 B1**
(45) Veröffentlichungstag und Bekanntmachung des Hinweises auf die Patenterteilung: **07.08.2013**
(21) Anmeldenummer: 05010656.6
(22) Anmeldetag: 17.05.2005
(51) Int. Cl.: B60J 5/04

(54) **Rohbautür eines Fahrzeugs**
Door for vehicle
Porte pour véhicule

(30) Priorität: 18.05.2004 DE 102004024642
(43) Veröffentlichungstag der Anmeldung: 23.11.2005
(73) Patentinhaber: DURA Automotive Body and Glass Systems GmbH, 58840 Plettenberg (DE)
(72) Erfinder: Rottmann, Ralf, 57489 Drolshagen (DE); Rau, Dirk, 57413 Finnentrop (DE)
(74) Vertreter: Zinnecker, Armin

(56) Entgegenhaltungen:
- EP-A- 0 587 428
- EP-A- 1 231 091
- DE-A1- 10 201 203
- DE-A1- 19 727 010

## Beschreibung

Die Erfindung betrifft eine Rohbautür mit einem Türrahmen.

Rohbautüren dieser Art sind bereits bekannt. Sie umfassen üblicherweise noch weitere Bestandteile, insbesondere einen Türkasten, eine Schachtverstärkung, ein Spiegeldreieck, einen Seitenaufprallträger, eine Fensterführung und/oder eine Türaußenhaut.

Eine Rohbautür der eingangs angegebenen Art ist aus der EP 0 997 331 A2 bekannt.

Aus der DE 197 27 010 A1 ist ein Fensterrahmenmodul zur Herstellung von Kraftfahrzeugtüren bekannt, das sich im wesentlichen aus drei Hauptbaugruppen zusammensetzt, nämlich einem Fensterrahmen, einer der Türinnenseite zugewandten, an dem Fensterrahmen befestigten, einteiligen Rahmenblende aus Kunststoff und einem an dem Fensterrahmen angeordneten einteiligen Dichtungsmodul, das auf den Fensterrahmen gestülpt wird.

Die EP-A-1 231 091 offenbart eine Rohbautür eines Kraftfahrzeugs, deren Türkasten mit einem aus einem Profil bestehenden Fensterrahmen verbunden ist. Die A- und B-Säulen des Türkastens bestehen aus Formteilen, deren obere Bereiche die seitlichen Bereiche des Fensterrahmens bilden. Mit den Enden der oberen Bereiche ist ein den oberen Abschnitt des Fensterrahmens bildendes Profil verbunden.

Aus der DE 102 01 203 A1 ist ein geschlossener metallischer Rahmen als Teil einer Fahrzeugkarosserie bekannt, der als einteiliges Gußteil hergestellt ist.

Die EP-A-0 587 428 offenbart einen weiteren Türrahmen für ein Kraftfahrzeug.

Aufgabe der Erfindung ist es, bei einer Rohbautür der eingangs angegebenen Art die Stabilität zu erhöhen.

Erfindungsgemäß wird diese Aufgabe dadurch gelöst, daß der Türrahmen im Bereich der A-Säule und/oder im Bereich der B-Säule durch jeweils mindestens zwei Formteile eingefaßt ist. Im Bereich der A-Säule ist der Türrahmen durch eine oder die innere Schachtverstärkung und durch ein Spiegeldreieck eingefaßt. Stattdessen oder zusätzlich ist der Türrahmen im Bereich der B-Säule durch eine oder die innere Schachtverstärkung und durch den Türkasten eingefaßt. Wenn der Türrahmen sowohl im Bereich der A-Säule als auch im Bereich der B-Säule durch zwei Formteile eingefaßt ist, ist es vorteilhaft, wenn dafür ein und dieselbe innere Schachtverstärkung verwendet wird.

Durch die Erfindung kann ein verbesserter Kraftfluß innerhalb der Rohbautür gewährleistet werden, wodurch die Stabilität erhöht werden kann oder - bei gleichbleibender Stabilität - die Rohbautür leichter gebaut werden kann. Ein zusätzlicher Vorteil kann darin bestehen, daß sich die Rohbautür sehr formgenau herstellen lassen kann, wodurch die Qualität der Rohbautür verbessert werden kann.

Vorteilhafte Weiterbildungen der Erfindung sind in den Unteransprüchen beschrieben.

Die Schachtverstärkung kann ein Teil in Form des Spiegeldreiecks umfassen. In diesem Fall ist die Schachtverstärkung vorzugsweise mit dem Teil in Form des Spiegeldreiecks einteilig.

Vorteilhaft ist es, wenn im Bereich der B-Säule ein Verstärkungsteil vorgesehen ist.

Dieses Verstärkungsteil ist vorzugsweise mit dem Türrahmen und/oder mit dem Türkasten verbunden. Hierdurch wird die Stabilität der Rohbautür zusätzlich erhöht.

Die Rohbautür kann aus einem Leichtbauwerkstoff, vorzugsweise Aluminium, hergestellt sein.

Es ist allerdings auch möglich, die Rohbautür in Mischbauweise, also unter Verwendung verschiedener Werkstoffe, herzustellen, vorzugsweise aus Stahl und Aluminium.

Vorzugsweise wird die Rohbautür durch Verkleben hergestellt.

Eine weitere vorteilhafte Weiterbildung ist dadurch gekennzeichnet, daß der Türrahmen mit einem oder mehreren oder allen Formteilen durch Verkleben verbunden ist. Vorzugsweise ist ein im Bereich der B-Säule vorgesehenes Verstärkungsteil mit dem Türrahmen und/oder dem Türkasten durch Verkleben verbunden. Bei allen Verklebungen können Toleranzen im Klebespalt kompensiert werden, wodurch die Qualität der Rohbautür erhöht werden kann.

Ein Ausführungsbeispiel der Erfindung wird nachstehend anhand der beigefügten Zeichnung im einzelnen erläutert. In der Zeichnung zeigt
- Fig. 1: die Bestandteile einer Rohbautür in einer Seitenansicht,
- Fig. 2: die Rohbautür gemäß Fig. 1 im zusammengebauten Zustand im Bereich der A-Säule,
- Fig. 3: die Rückseite der Rohbautür in dem in Fig. 2 dargestellten Bereich,
- Fig. 4: einen Schnitt längs der Linie IV-IV in Fig. 3,
- Fig. 5: die Rohbautür gemäß Fig. 1 im zusammengebauten Zustand im Bereich der B-Säule und
- Fig. 6: einen Schnitt längs der Linie VI-VI in Fig. 5.

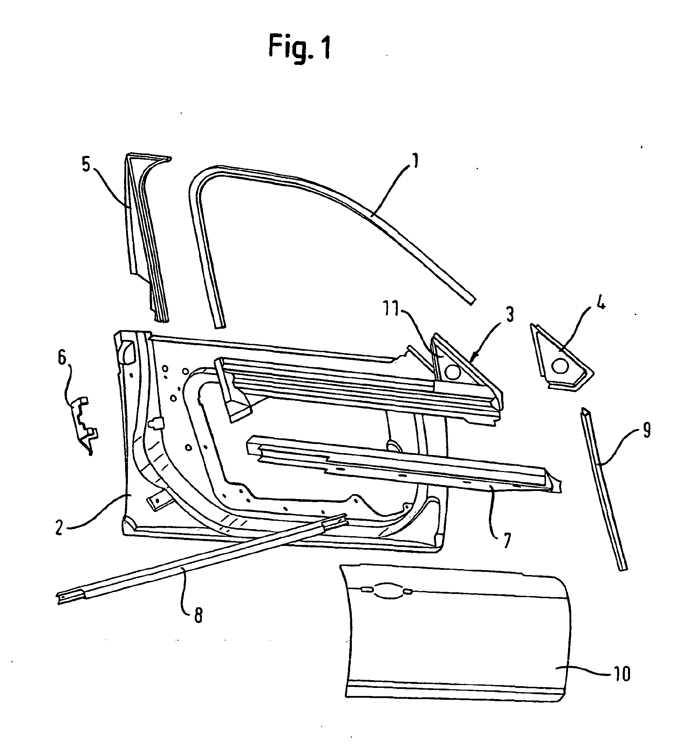

Die in Fig. 1 in einer Explosionsdarstellung gezeigte Rohbautür besteht aus einem Türrahmen 1, einem Türkasten 2, einer inneren Schachtverstärkung 3, einem Spiegeldreieck 4, einem Verstärkungsteil 5 im Bereich der B-Säule, einer Schloßverstärkung 6, einer äußeren Schachtverstärkung 7, einem Seitenaufprallträger 8, einer Fensterführung 9 und einer Türaußenhaut 10.

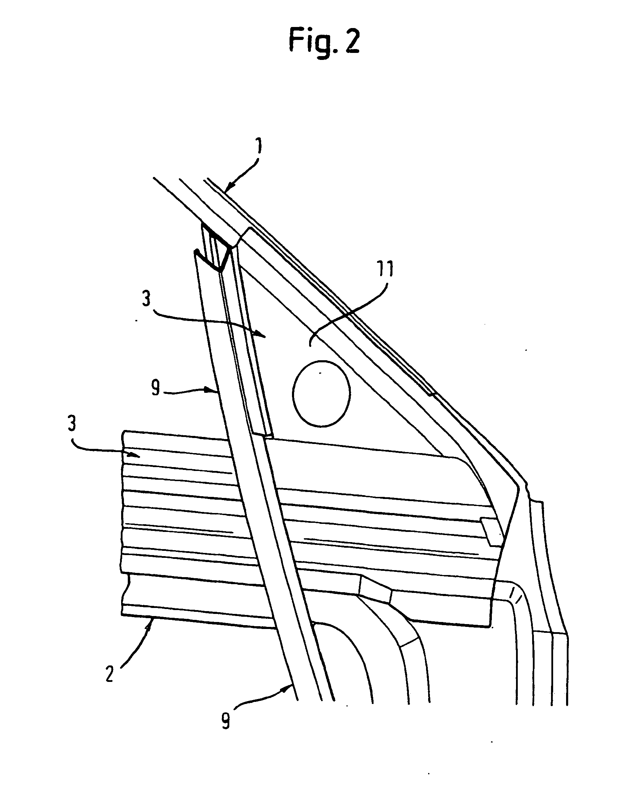

Wie in Fig. 2, 3 und 4 dargestellt, ist der Türrahmen 1 im Bereich der A-Säule durch zwei Formteile eingefaßt, nämlich durch die innere Schachtverstärkung 3 und das Spiegeldreieck 4. Die innere Schachtverstärkung 3 umfaßt im Bereich der A-Säule ein Teil 11 in Form des Spiegeldreiecks 4. Dieses Teil 11 ist mit der inneren Schachtverstärkung 3 einstückig. An der inneren, im wesentlichen vertikal verlaufenden Endkante des Teils 11 ist die Fensterführung 9 befestigt.

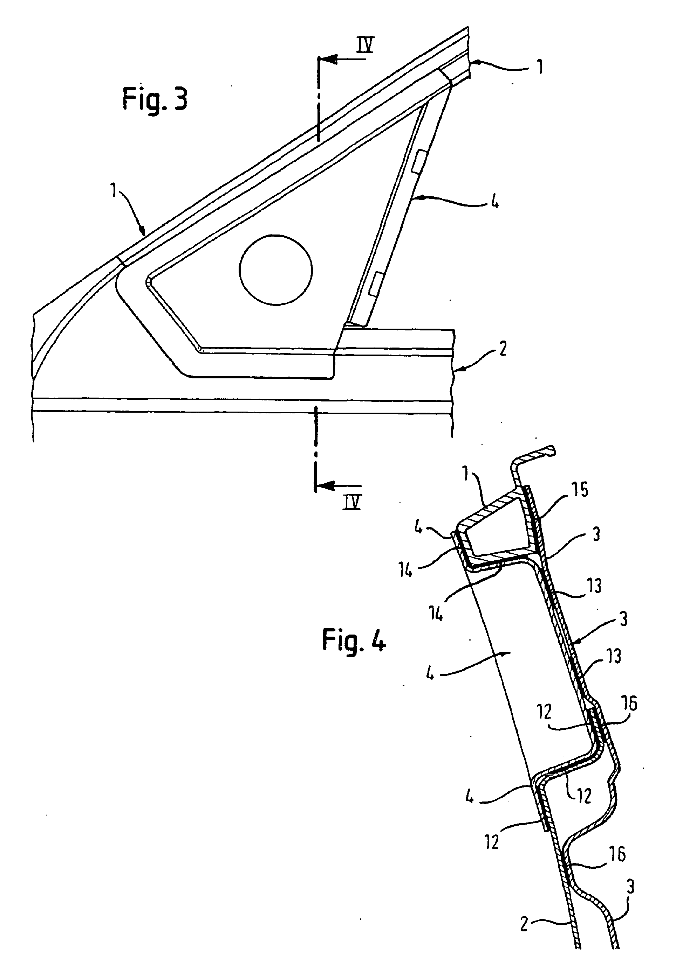

Wie aus Fig. 4 ersichtlich ist das Spiegeldreieck 4 mit dem Türkasten 2 durch Verklebungen 12 verbunden. Ferner ist das Spiegeldreieck 4 mit der inneren Schachtverstärkung 3 durch Verklebungen 13 verbunden. Das Spiegeldreieck 4 ist ferner mit dem Türrahmen 1 durch Verklebungen 14 verbunden. Der Türrahmen 1 ist mit der inneren Schachtverstärkung 3 durch eine Verklebung 15 verbunden. Die innere Schachtverstärkung 3 ist mit dem Türkasten 2 durch Verklebungen 16 verbunden.

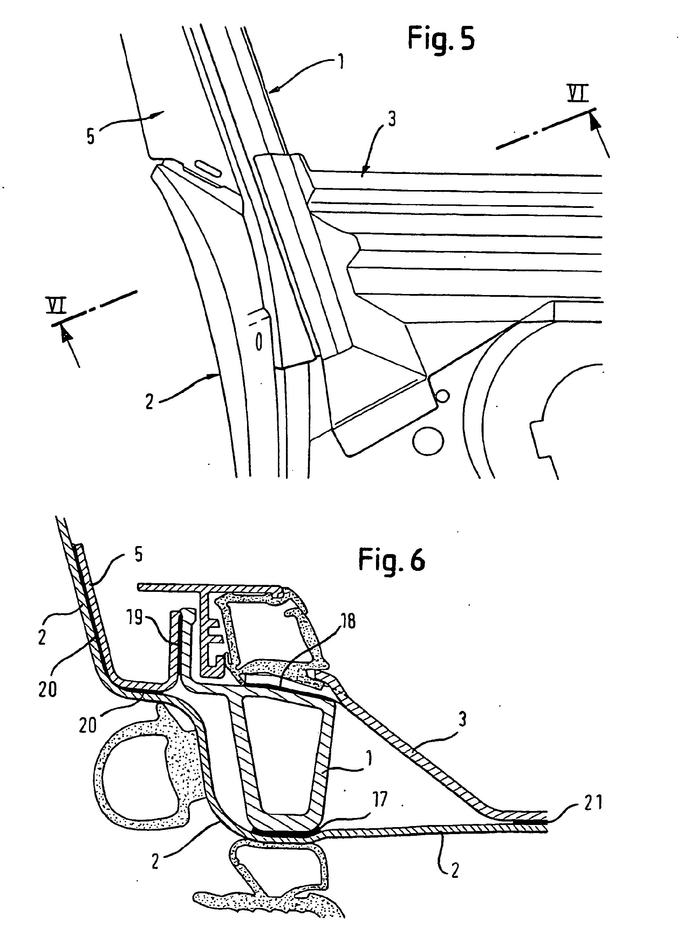

Wie in Fig. 5 und 6 dargestellt ist der Türrahmen 1 im Bereich der B-Säule durch zwei Formteile eingefaßt, nämlich durch die innere Schachtverstärkung 3 und den Türkasten 2. Der Türrahmen 1 ist mit dem Türkasten 2 durch eine Verklebung 17 verbunden. Er ist mit der inneren Schachtverstärkung 3 durch eine Verklebung 18 verbunden. Ferner ist der Türrahmen 1 mit der Verstärkung 5 durch eine Verklebung 19 verbunden. Die Verstärkung 5 ist mit dem Türkasten 2 durch Verklebungen 20 verbunden. Der Türkasten 2 ist mit der inneren Schachtverstärkung 3 durch eine Verklebung 21 verbunden.

## Patentansprüche

1. Rohbautür für ein Kraftfahrzeug mit einem Türrahmen (1),
**dadurch gekennzeichnet,**
**daß** der Türrahmen (1) im Bereich der A-Säule durch eine oder die innere Schachtverstärkung (3) und ein Spiegeldreieck (4) eingefaßt ist und/oder
**daß** der Türrahmen (1) im Bereich der B-Säule durch eine oder die innere Schachtverstärkung (3) und den Türkasten (2) eingefaßt ist.

2. Rohbautür nach Anspruch 1, **dadurch gekennzeichnet, daß** die Schachtverstärkung (3) ein Teil (11) in Form des Spiegeldreiecks (4) umfaßt.

3. Rohbautür nach Anspruch 1 oder 2, **dadurch gekennzeichnet, daß** im Bereich der B-Säule ein Verstärkungsteil (5) vorgesehen ist.

4. Rohbautür nach Anspruch 3, **dadurch gekennzeichnet, daß** das Verstärkungsteil (5) mit den Türrahmen (1) verbunden ist.

5. Rohbautür nach Anspruch 3 oder 4, **dadurch gekennzeichnet, daß** das Verstärkungsteil (5) mit dem Türkasten (2) verbunden ist.

6. Rohbautür nach einem der vorhergehenden Ansprüche, **dadurch gekennzeichnet, daß** die Rohbautür aus einem Leichtbauwerkstoff, vorzugsweise Aluminium, hergestellt ist.

7. Rohbautür nach einem der Ansprüche 1 bis 5, **dadurch gekennzeichnet, daß** die Rohbautür in Mischbauweise hergestellt ist, vorzugsweise aus Stahl und Aluminium.

8. Rohbautür nach einem der vorhergehenden Ansprüche, **dadurch gekennzeichnet, daß** der Türrahmen (1) mit einem oder mehreren oder allen Formteilen (3, 4, 2) durch Verkleben (14, 15, 17, 18, 19) verbunden ist.

## Claims

1. Door for a motor vehicle, having a door frame (1),
**characterised in that**,
the door frame (1) is enclosed in the region of the windscreen pillar by an or the internal shaft reinforcement (3) and a mirror triangle (4) and/or
that the door frame (1) is enclosed in the region of the centre pillar by an or the internal shaft reinforcement (3) and the door box (2).

2. Door according to claim 1, **characterised in that** the shaft reinforcement (3) comprises a section (11) in the form of the mirror triangle (4).

3. Door according to claim 1 or 2, **characterised in that** a reinforcement section (5) is provided in the region of the centre pillar.

4. Door according to claim 3, **characterised in that** the reinforcement section (5) is connected to the door frame (1).

5. Door according to claim 3 or 4, **characterised in that** the reinforcement section (5) is connected to the door box (2).

6. Door according to one of the preceding claims, **characterised in that** the door is produced from a light building material, preferably aluminium.

7. Door according to one of claims 1 to 5, **characterised in that** the door is produced in composite design, preferably from steel and aluminium.

8. Door according to one of the preceding claims, **characterised in that** the door frame (1) is connected to one or more or all moulded parts (3, 4, 2) by adhesion (14, 15, 17, 18, 19).

## Revendications

1. Porte pour véhicule comprenant un cadre de porte (1),
**caractérisée**
**en ce que** le cadre de porte (1) est inséré dans la zone du montant A au moyen d'un ou du renfort de gaine intérieur (3) et d'un triangle de rétroviseur (4) et/ou
**en ce que** le cadre de porte (1) est inséré dans la zone du montant B au moyen d'un ou du renfort de gaine intérieur (3) et du châssis de porte (2).

2. Porte selon la revendication 1, **caractérisée en ce que** le renfort de gaine (3) comprend une partie (11) réalisée dans la forme du triangle de rétroviseur (4).

3. Porte selon la revendication 1 ou 2, **caractérisée en ce qu'**un élément de renfort (5) est prévu dans la zone du montant B.

4. Porte selon la revendication 3, **caractérisée en ce que** l'élément de renfort (5) est relié avec le cadre de porte (1).

5. Porte selon la revendication 3 ou 4, **caractérisé en ce que** l'élément de renfort (5) est relié avec le châssis de porte (2).

6. Porte selon l'une des revendications précédéntes, **caractérisée en ce que** la porte est fabriquée dans un matériau de construction légère, par exemple l'aluminium.

7. Porte selon l'une des revendications 1 à 5, **caractérisée en ce que** la porte est fabriquée dans une construction mixte, de préférence à base d'acier et d'aluminium.

8. Porte selon l'une des revendications précédentes, **caractérisée en ce que** le cadre de porte (1) est relié avec une ou plusieurs ou toutes les pièces usinées (3, 4, 2) par collage (14, 15, 17, 18, 19).
